# EUROPEAN PATENT APPLICATION

(11) **EP 4 354 961 A1**
(43) Date of publication of application: **17.04.2024**
(21) Application number: 23203492.6
(22) Date of filing: 13.10.2023
(51) Int. Cl.: H04W 36/02, H04W 36/36, H04W 84/12

(54) **ASSISTED ROAMING**

(30) Priority: 14.10.2022 US 202263416163 P; 10.10.2023 US 202318484142
(71) Applicant: Apple Inc., Cupertino, CA 95014 (US)
(72) Inventor: VERMA, Lochan, Cupertino, California 95014 (US); DAVE, Brajesh, Cupertino, California 95014 (US); LIU, Yong, Cupertino, California 95014 (US); YU, Yang, Cupertino, California 95014 (US); YONG, Su Khiong, Cupertino, California 95014 (US)
(74) Representative: Simmons & Simmons

(57) **Abstract**

Methods, systems and apparatuses for managing roaming by access points (AP), a controller, and a wireless device are described. The wireless device may indicate intent to roam from a source AP to a target AP. The wireless device, APs, and controller may adjust buffering in anticipation of the change. The wireless device, APs, and controller may deliver buffered data via the target AP following a successful change from the source AP.

## Description

### PRIORITY CLAIM

This application claims priority to U.S. provisional patent application serial number 63/416,163, entitled "Assisted Roaming," filed October 14, 2022, which is hereby incorporated by reference in its entirety as though fully and completely set forth herein.

### FIELD

The present application relates to wireless communications, including techniques for wireless communication using assisted roaming in wireless local area networks.

### DESCRIPTION OF THE RELATED ART

Wireless communication systems are rapidly growing in usage. Further, wireless communication technology has evolved from voice-only communications to also include the transmission of data, such as Internet and multimedia content. A popular short/intermediate range wireless communication standard is wireless local area network (WLAN). Most modern WLANs are based on the IEEE 802.11 standard (and/or 802.11, for short) and are marketed under the Wi-Fi brand name. WLAN networks link one or more devices to a wireless access point, which in turn provides connectivity to the wider area Internet.

In 802.11 systems, devices that wirelessly connect to each other are referred to as "stations", "mobile stations", "user devices", "user equipment", or STA or UE for short. Wireless stations can be either wireless access points or wireless clients (and/or mobile stations). Access points (APs), which are also referred to as wireless routers, act as base stations for the wireless network. APs transmit and receive radio frequency signals for communication with wireless client devices. APs may also couple to the Internet in a wired and/or wireless fashion. Wireless clients operating on an 802.11 network can be any of various devices such as laptops, tablet devices, smart phones, smart watches, or fixed devices such as desktop computers. Some 802.11 networks may include multiple APs. STAs may roam from one AP to another. Wireless client devices may be referred to herein as user equipment (and/or UE for short). Some wireless client devices are also collectively referred to herein as mobile devices or mobile stations (although, as noted above, wireless client devices overall may be stationary devices as well).

Mobile electronic devices may take the form of smart phones or tablets that a user typically carries. Wearable devices (also referred to as accessory devices) are a newer form of mobile electronic device, one example being smart watches. Additionally, low-cost low-complexity wireless devices intended for stationary or nomadic deployment are also proliferating as part of the developing "Internet of Things". In other words, there is an increasingly wide range of desired device complexities, capabilities, traffic patterns, and other characteristics.

### SUMMARY

Embodiments described herein relate to systems, methods, apparatuses, and mechanisms for coexistence of multiple RATs.

In one set of embodiments, a method may include: at a wireless device: establishing communication with a first access point (AP). The first AP may be among a first group of APs managed by a controller. The method may include determining to roam from the first AP to a second AP among the first group of APs and transmitting, to the first AP, an indication of intent to roam. The method may include establishing communication with the second AP; and receiving, from the second AP, first downlink data.

In some embodiments, a method includes at a wireless device: establishing communication with a first access point (AP). The first AP being among a first group of APs managed by a controller. The method may include determining to roam from the first AP to a second AP among the first group of APs and transmitting, to the first AP, an indication of intent to roam. The method may include performing an attempt to establish communication with the second AP. The method may include determining that the attempt to establish communication with the second AP is not successful. The method may include, in response to determining that the attempt to establish communication with the second AP is not successful, transmitting, to the first AP, an indication that the attempt to establish communication with the second AP is not successful.

In some embodiments, a method comprises at a first access point (AP): establishing communication with a controller. The first AP being among a first group of APs managed by the controller. The method may include establishing communication with a first wireless device and receiving, from the first wireless device, a first indication of intent to roam from the first AP to a second AP among the first group of APs. The method may include, in response to the first indication of intent to roam: transmitting, to the controller, a second indication to stop forwarding data for the first wireless device; removing at least one unit of data from a queue for transmission to the first wireless device; and transmitting, to the controller, the at least one unit of data.

In some embodiments, a method comprises, at a second access point (AP): establishing communication with a controller. The second AP being among a first group of APs managed by the controller. The method may include establishing communication with a first wireless device. The method may include transmitting, to the controller, a first indication of establishing communication with the first wireless device. The method may include receiving, from the controller, first downlink data for the first wireless device. The method may include transmitting, to the first wireless device, the first downlink data.

In some embodiments, a method comprises, at a controller: establishing communication with a first access point (AP). The first AP being among a first group of APs managed by the controller. The method may include establishing communication with a second AP among the first group of APs. The method may include receiving, from the first AP, a first indication to stop forwarding data for a first wireless device. The method may include, in response to the first indication, buffering at least one unit of data for transmission to the first wireless device.

This Summary is intended to provide a brief overview of some of the subject matter described in this document. Accordingly, it will be appreciated that the above-described features are merely examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF THE DRAWINGS

A better understanding of the present subject matter can be obtained when the following detailed description of the embodiments is considered in conjunction with the following drawings.
Figure 1 illustrates an example wireless communication system, according to some embodiments.
Figure 2 illustrates an example simplified block diagram of a wireless device, according to some embodiments.
Figure 3 illustrates an example WLAN communication system, according to some embodiments.
Figure 4 illustrates an example simplified block diagram of a WLAN Access Point (AP), according to some embodiments.
Figure 5 illustrates an example simplified block diagram of a wireless station (STA), according to some embodiments.
Figure 6 illustrates an example simplified block diagram of a wireless node, according to some embodiments.
Figure 7 illustrates an example method of communication, according to some embodiments.
Figures 8-13 illustrate example aspects of the method of Figure 7, according to some embodiments.

While the features described herein are susceptible to various modifications and alternative forms, specific embodiments thereof are shown by way of example in the drawings and are herein described in detail. It should be understood, however, that the drawings and detailed description thereto are not intended to be limiting to the particular form disclosed, but on the contrary, the intention is to cover all modifications, equivalents and alternatives falling within the spirit and scope of the subject matter as defined by the appended claims.

### DETAILED DESCRIPTION

### Acronyms

Various acronyms are used throughout the present application. Definitions of the most prominently used acronyms that may appear throughout the present application are provided below:
**UE:** User Equipment
**AP:** Access Point
**STA:** Wireless Station
**TX:** Transmission/Transmit
**RX:** Reception/Receive
**MLD:** Multi-link Device
**LAN:** Local Area Network
**WLAN:** Wireless LAN
**RAT:** Radio Access Technology
**QoS:** Quality of Service
**UL:** Uplink
**DL:** Downlink

### Terminology

The following is a glossary of terms used in this disclosure:
**Memory Medium** - Any of various types of non-transitory memory devices or storage devices. The term "memory medium" is intended to include an installation medium, e.g., a CD-ROM, floppy disks, or tape device; a computer system memory or random access memory such as DRAM, DDR RAM, SRAM, EDO RAM, Rambus RAM, etc.; a non-volatile memory such as a Flash, magnetic media, e.g., a hard drive, or optical storage; registers, or other similar types of memory elements, etc. The memory medium may include other types of non-transitory memory as well or combinations thereof. In addition, the memory medium may be located in a first computer system in which the programs are executed, or may be located in a second different computer system which connects to the first computer system over a network, such as the Internet. In the latter instance, the second computer system may provide program instructions to the first computer for execution. The term "memory medium" may include two or more memory mediums which may reside in different locations, e.g., in different computer systems that are connected over a network. The memory medium may store program instructions (e.g., embodied as computer programs) that may be executed by one or more processors.

**Carrier Medium** - a memory medium as described above, as well as a physical transmission medium, such as a bus, network, and/or other physical transmission medium that conveys signals such as electrical, electromagnetic, or digital signals.

**Computer System** - any of various types of computing or processing systems, including a personal computer system (PC), mainframe computer system, workstation, network appliance, Internet appliance, personal digital assistant (PDA), television system, grid computing system, or other device or combinations of devices. In general, the term "computer system" can be broadly defined to encompass any device (and/or combination of devices) having at least one processor that executes instructions from a memory medium.

**Mobile Device (and/or Mobile Station)** - any of various types of computer systems devices which are mobile or portable and which performs wireless communications using WLAN communication. Examples of mobile devices include mobile telephones or smart phones (e.g., iPhone^{™}, Android^{™}-based phones), and tablet computers such as iPad^{™}, Samsung Galaxy^{™}, etc. Various other types of devices would fall into this category if they include Wi-Fi or both cellular and Wi-Fi communication capabilities, such as laptop computers (e.g., MacBook^{™}), portable gaming devices (e.g., Nintendo DS^{™}, PlayStation Portable^{™}, Gameboy Advance^{™}, iPhone^{™}), portable Internet devices, and other handheld devices, as well as wearable devices such as smart watches, smart glasses, headphones, pendants, earpieces, etc. In general, the term "mobile device" can be broadly defined to encompass any electronic, computing, and/or telecommunications device (and/or combination of devices) which is easily transported by a user and capable of wireless communication using WLAN or Wi-Fi.

**Wireless Device (and/or Wireless Station)** - any of various types of computer systems devices which performs wireless communications using WLAN communications. As used herein, the term "wireless device" may refer to a mobile device, as defined above, or to a stationary device, such as a stationary wireless client or a wireless base station. For example, a wireless device may be any type of wireless station of an 802.11 system, such as an access point (AP) or a client station (STA or UE). Further examples include televisions, media players (e.g., AppleTV^{™}, Roku^{™}, Amazon FireTV^{™}, Google Chromecast^{™}, etc.), refrigerators, laundry machines, thermostats, and so forth.

**WLAN** - The term "WLAN" has the full breadth of its ordinary meaning, and at least includes a wireless communication network or RAT that is serviced by WLAN access points and which provides connectivity through these access points to the Internet. Most modern WLANs are based on IEEE 802.11 standards and are marketed under the name "Wi-Fi". A WLAN network is different from a cellular network.

**Processing Element** - refers to various implementations of digital circuitry that perform a function in a computer system. Additionally, processing element may refer to various implementations of analog or mixed-signal (combination of analog and digital) circuitry that perform a function (and/or functions) in a computer or computer system. Processing elements include, for example, circuits such as an integrated circuit (IC), ASIC (Application Specific Integrated Circuit), portions or circuits of individual processor cores, entire processor cores, individual processors, programmable hardware devices such as a field programmable gate array (FPGA), and/or larger portions of systems that include multiple processors.

**Automatically** - refers to an action or operation performed by a computer system (e.g., software executed by the computer system) or device (e.g., circuitry, programmable hardware elements, ASICs, etc.), without user input directly specifying or performing the action or operation. Thus, the term "automatically" is in contrast to an operation being manually performed or specified by the user, where the user provides input to directly perform the operation. An automatic procedure may be initiated by input provided by the user, but the subsequent actions that are performed "automatically" are not specified by the user, e.g., are not performed "manually", where the user specifies each action to perform. For example, a user filling out an electronic form by selecting each field and providing input specifying information (e.g., by typing information, selecting check boxes, radio selections, etc.) is filling out the form manually, even though the computer system must update the form in response to the user actions. The form may be automatically filled out by the computer system where the computer system (e.g., software executing on the computer system) analyzes the fields of the form and fills in the form without any user input specifying the answers to the fields. As indicated above, the user may invoke the automatic filling of the form, but is not involved in the actual filling of the form (e.g., the user is not manually specifying answers to fields but rather they are being automatically completed). The present specification provides various examples of operations being automatically performed in response to actions the user has taken.

**Concurrent** - refers to parallel execution or performance, where tasks, processes, signaling, messaging, or programs are performed in an at least partially overlapping manner. For example, concurrency may be implemented using "strong" or strict parallelism, where tasks are performed (at least partially) in parallel on respective computational elements, or using "weak parallelism", where the tasks are performed in an interleaved manner, e.g., by time multiplexing of execution threads.

**Configured to** - Various components may be described as "configured to" perform a task or tasks. In such contexts, "configured to" is a broad recitation generally meaning "having structure that" performs the task or tasks during operation. As such, the component can be configured to perform the task even when the component is not currently performing that task (e.g., a set of electrical conductors may be configured to electrically connect a module to another module, even when the two modules are not connected). In some contexts, "configured to" may be a broad recitation of structure generally meaning "having circuitry that" performs the task or tasks during operation. As such, the component can be configured to perform the task even when the component is not currently on. In general, the circuitry that forms the structure corresponding to "configured to" may include hardware circuits.

Various components may be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

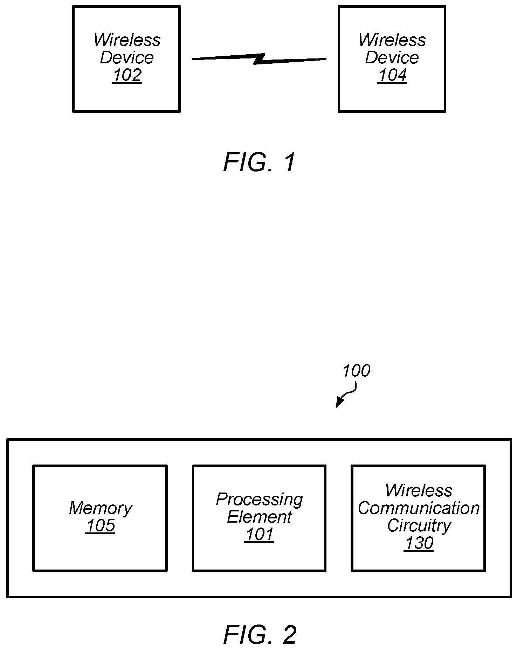

### Figures 1-2 - Wireless Communication System

Figure 1 illustrates an exemplary (and simplified) wireless communication system in which aspects of this disclosure may be implemented. It is noted that the system of Figure 1 is merely one example of a possible system, and embodiments of this disclosure may be implemented in any of various systems, as desired.

As shown, the exemplary wireless communication system includes a ("first") wireless device 102 in communication with another ("second") wireless device. The first wireless device 102 and the second wireless device 104 may communicate wirelessly using any of a variety of wireless communication techniques.

As one possibility, the first wireless device 102 and the second wireless device 104 may perform communication using wireless local area networking (WLAN) communication technology (e.g., IEEE 802.11 / Wi-Fi based communication) and/or techniques based on WLAN wireless communication. One or both of the wireless device 102 and the wireless device 104 may also be capable of communicating via one or more additional wireless communication protocols, such as any of Bluetooth (BT), Bluetooth Low Energy (BLE), near field communication (NFC), GSM, UMTS (WCDMA, TDSCDMA), LTE, LTE-Advanced (LTE-A), NR, 3GPP2 CDMA2000 (e.g., 1xRTT, 1xEV-DO, HRPD, eHRPD), Wi-MAX, GPS, etc.

The wireless devices 102 and 104 may be any of a variety of types of wireless device. As one possibility, one or more of the wireless devices 102 and/or 104 may be a substantially portable wireless user equipment (UE) device, such as a smart phone, handheld device, a wearable device such as a smart watch, a tablet, a motor vehicle, or virtually any type of wireless device. As another possibility, one or more of the wireless devices 102 and/or 104 may be a substantially stationary device, such as a set top box, media player (e.g., an audio or audiovisual device), gaming console, desktop computer, appliance, door, access point, base station, or any of a variety of other types of device.

Each of the wireless devices 102 and 104 may include wireless communication circuitry configured to facilitate the performance of wireless communication, which may include various digital and/or analog radio frequency (RF) components, a processor that is configured to execute program instructions stored in memory, a programmable hardware element such as a field-programmable gate array (FPGA), and/or any of various other components. The wireless device 102 and/or the wireless device 104 may perform any of the method embodiments described herein, or any portion of any of the method embodiments described herein, using any or all of such components.

Each of the wireless devices 102 and 104 may include one or more antennas for communicating using one or more wireless communication protocols. In some cases, one or more parts of a receive and/or transmit chain may be shared between multiple wireless communication standards; for example, a device might be configured to communicate using either of Bluetooth or Wi-Fi using partially or entirely shared wireless communication circuitry (e.g., using a shared radio or at least shared radio components). The shared communication circuitry may include a single antenna, or may include multiple antennas (e.g., for MIMO) for performing wireless communications. Alternatively, a device may include separate transmit and/or receive chains (e.g., including separate antennas and other radio components) for each wireless communication protocol with which it is configured to communicate. As a further possibility, a device may include one or more radios or radio components which are shared between multiple wireless communication protocols, and one or more radios or radio components which are used exclusively by a single wireless communication protocol. For example, a device might include a shared radio for communicating using one or more of LTE and/or 5G NR, and separate radios for communicating using Wi-Fi and/or Bluetooth. Other configurations are also possible.

As previously noted, aspects of this disclosure may be implemented in conjunction with the wireless communication system of Figure 1. For example, a wireless device (e.g., either of wireless devices 102 or 104) may be configured to perform methods of communication to improve performance in view of in-device coexistence interference between multiple RATs..

Figure 2 illustrates an exemplary wireless device 100 (e.g., corresponding to wireless devices 102 and/or 104) that may be configured for use in conjunction with various aspects of the present disclosure. The device 100 may be any of a variety of types of device and may be configured to perform any of a variety of types of functionality. The device 100 may be a substantially portable device or may be a substantially stationary device, potentially including any of a variety of types of device. The device 100 may be configured to perform one or more wireless communication techniques or features, such as any of the techniques or features illustrated and/or described subsequently herein with respect to any or all of the Figures.

As shown, the device 100 may include a processing element 101. The processing element may include or be coupled to one or more memory elements. For example, the device 100 may include one or more memory media (e.g., memory 105), which may include any of a variety of types of memory and may serve any of a variety of functions. For example, memory 105 could be RAM serving as a system memory for processing element 101. Other types and functions are also possible.

Additionally, the device 100 may include wireless communication circuitry 130. The wireless communication circuitry may include any of a variety of communication elements (e.g., antenna(s) for wireless communication, analog and/or digital communication circuitry/controllers, etc.) and may enable the device to wirelessly communicate using one or more wireless communication protocols.

Note that in some cases, the wireless communication circuitry 130 may include its own processing element (e.g., a baseband processor), e.g., in addition to the processing element 101. For example, the processing element 101 may be an `application processor' whose primary function may be to support application layer operations in the device 100, while the wireless communication circuitry 130 may be a `baseband processor' whose primary function may be to support baseband layer operations (e.g., to facilitate wireless communication between the device 100 and other devices) in the device 100. In other words, in some cases the device 100 may include multiple processing elements (e.g., may be a multi-processor device). Other configurations (e.g., instead of or in addition to an application processor / baseband processor configuration) utilizing a multi-processor architecture are also possible.

The device 100 may additionally include any of a variety of other components (not shown) for implementing device functionality, depending on the intended functionality of the device 100, which may include further processing and/or memory elements (e.g., audio processing circuitry), one or more power supply elements (which may rely on battery power and/or an external power source) user interface elements (e.g., display, speaker, microphone, camera, keyboard, mouse, touchscreen, etc.), and/or any of various other components.

The components of the device 100, such as processing element 101, memory 105, and wireless communication circuitry 130, may be operatively coupled via one or more interconnection interfaces, which may include any of a variety of types of interface, possibly including a combination of multiple types of interface. As one example, a USB high-speed inter-chip (HSIC) interface may be provided for inter-chip communications between processing elements. Alternatively (and/or in addition), a universal asynchronous receiver transmitter (UART) interface, a serial peripheral interface (SPI), inter-integrated circuit (I2C), system management bus (SMBus), and/or any of a variety of other communication interfaces may be used for communications between various device components. Other types of interfaces (e.g., intra-chip interfaces for communication within processing element 101, peripheral interfaces for communication with peripheral components within or external to device 100, etc.) may also be provided as part of device 100.

In some embodiments, the device 100 may be a multi-link device (MLD), e.g., capable of communicating using multiple different links simultaneously.

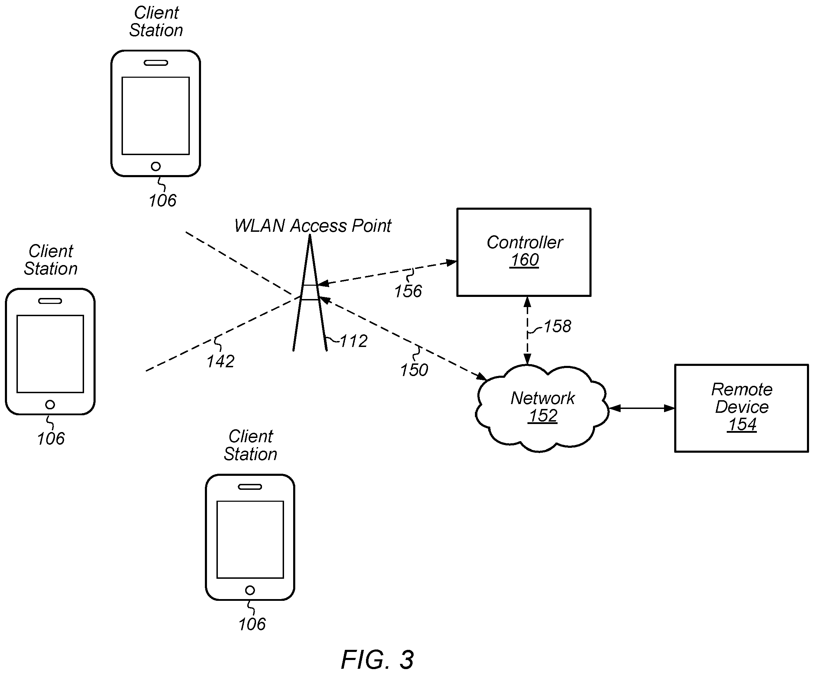

### Figure 3 - WLAN System

Figure 3 illustrates an example WLAN system according to some embodiments. As shown, the exemplary WLAN system includes a plurality of wireless client stations or devices (e.g., STAs or user equipment (UEs)), 106 that are configured to communicate over a wireless communication channel 142 with an Access Point (AP) 112, e.g., a Wi-Fi (or IEEE 802.11) access point. The AP 112 may communicate via a wired and/or a wireless communication channel 150 with one or more other electronic devices (not shown) and/or another network 152, such as the Internet. Additional electronic devices, such as the remote device 154, may communicate with components of the WLAN system via the network 152. For example, the remote device 154 may be another wireless client station, a server associated with an application executing on one of the STAs 106, etc. The WLAN system may be configured to operate according to any of various communications standards, such as the various IEEE 802.11 standards. In some embodiments, at least one wireless device 106 is configured to communicate directly with one or more neighboring mobile devices, without use of the access point 112.

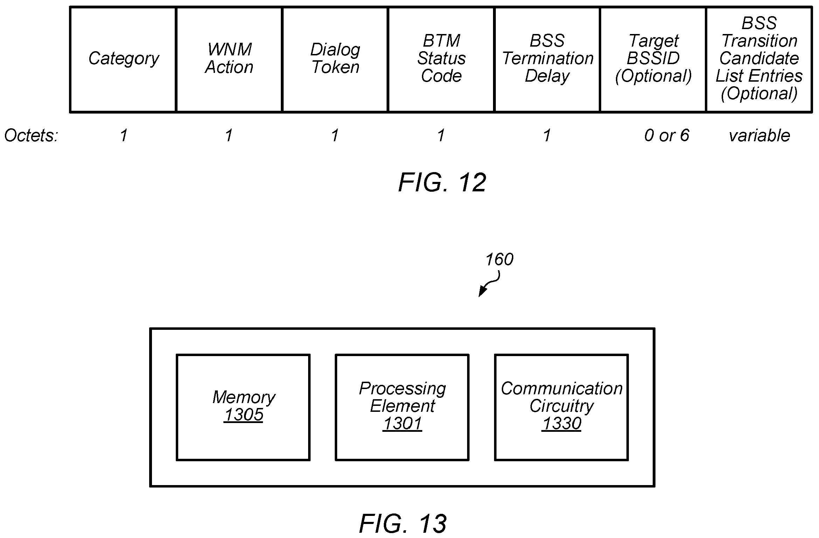

In some embodiments, AP 112 may communicate via a wired and/or a wireless communication channel 156 (and/or a combination of channels 150 and 158) with a controller 160 (see also: Figure 13). The controller may manage a wireless network (e.g., at an airport, stadium, campus, office, home, or any other facility or location) including one or more APs. The APs may share a common extended service set identifier (ESSID). In some embodiments, the APs may advertise a common service set identifier (SSID) (e.g., "XYZ airport", etc.). In some embodiments, the controller may be separate from the APs and may communicate with the APs via a direct connection (e.g., 156) and/or via the internet (e.g., via a combination of 150, 152, 158). In some embodiments, the controller may be housed in/with one of the APs and may communicate with the other APs via direct connection (e.g., 156) and/or via the internet (e.g., via a combination of 150, 152, 158).

Further, in some embodiments, a wireless device 106 (which may be an exemplary implementation of device 100) may be configured to perform methods for communication in a manner to reduce/avoid coexistence interference while communicating according to multiple RATs.

It will be appreciated that the wireless device 106 and/or AP 112 may be multi-link devices (MLDs). For example, the wireless device 106 and/or AP 112 may use one or multiple links to communicate. The wireless device may be a non-AP MLD, e.g., with multiple affiliated STAs. The AP may be an AP MLD, e.g., with multiple affiliated APs.

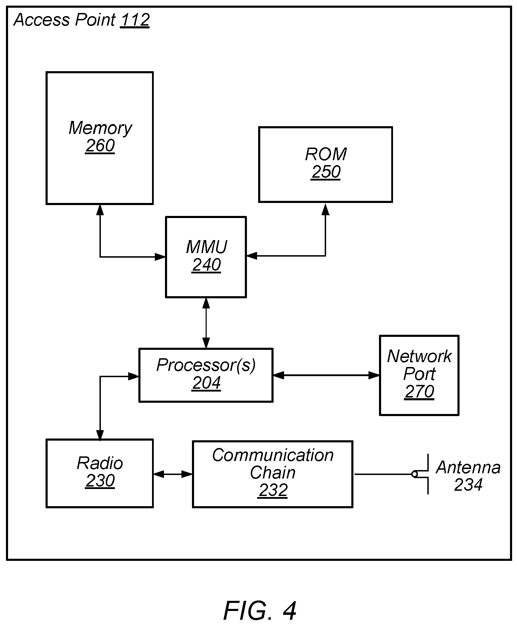

### Figure 4 - Access Point Block Diagram

Figure 4 illustrates an exemplary block diagram of an access point (AP) 112, which may be one possible exemplary implementation of the device 100 illustrated in Figure 4. It is noted that the block diagram of the AP of Figure 4 is only one example of a possible system. As shown, the AP 112 may include processor(s) 204 which may execute program instructions for the AP 112. The processor(s) 204 may also be coupled (directly or indirectly) to memory management unit (MMU) 240, which may be configured to receive addresses from the processor(s) 204 and to translate those addresses to locations in memory (e.g., memory 260 and read only memory (ROM) 250) or to other circuits or devices.

The AP 112 may include at least one network port 270. The network port 270 may be configured to couple to a wired network and provide a plurality of devices, such as mobile devices 106, access to the Internet. For example, the network port 270 (and/or an additional network port) may be configured to couple to a local network, such as a home network or an enterprise network. For example, port 270 may be an Ethernet port. The local network may provide connectivity to additional networks, such as the Internet.

The AP 112 may include at least one antenna 234, which may be configured to operate as a wireless transceiver and may be further configured to communicate with mobile device 106 via wireless communication circuitry 230. The antenna 234 communicates with the wireless communication circuitry 230 via communication chain 232. Communication chain 232 may include one or more receive chains, one or more transmit chains or both. The wireless communication circuitry 230 may be configured to communicate via Wi-Fi or WLAN, e.g., 802.11. The wireless communication circuitry 230 may also, or alternatively, be configured to communicate via various other wireless communication technologies, including, but not limited to, Long-Term Evolution (LTE), LTE Advanced (LTE-A), 5GNR, etc., for example when the AP is co-located with a base station in the case of a small cell, or in other instances when it may be desirable for the AP 112 to communicate via various different wireless communication technologies.

Further, in some embodiments, as further described below, AP 112 may be configured to perform methods for communication with a wireless device (e.g., 106) in a manner to reduce/avoid coexistence interference (e.g., at the wireless device) associated with a different RAT.

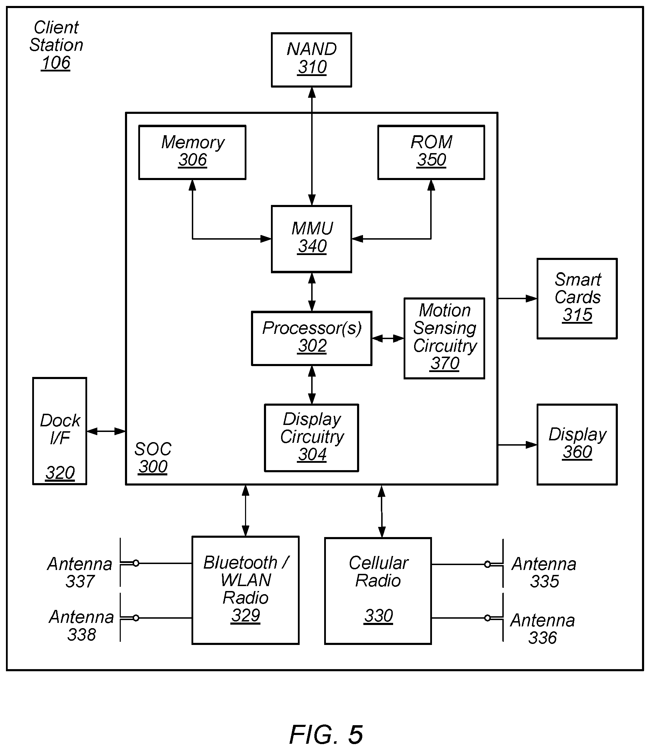

### Figure 5 - Client Station Block Diagram

Figure 5 illustrates an example simplified block diagram of a client station 106, which may be one possible exemplary implementation of the device 100 illustrated in Figure 4. According to embodiments, client station 106 may be a user equipment (UE) device, a mobile device or mobile station, and/or a wireless device or wireless station. As shown, the client station 106 may include a system on chip (SOC) 300, which may include portions for various purposes. The SOC 300 may be coupled to various other circuits of the client station 106. For example, the client station 106 may include various types of memory (e.g., including NAND flash 310), a connector interface (I/F) (and/or dock) 320 (e.g., for coupling to a computer system, dock, charging station, etc.), the display 360, cellular communication circuitry (e.g., cellular radio) 330 such as for 5G NR, LTE, etc., and short to medium range wireless communication circuitry (e.g., Bluetooth^{™}/WLAN radio) 329 (e.g., Bluetooth^{™} and WLAN circuitry). The client station 106 may further include one or more smart cards 315 that incorporate SIM (Subscriber Identity Module) functionality, such as one or more UICC(s) (Universal Integrated Circuit Card(s)). The cellular communication circuitry 330 may couple to one or more antennas, such as antennas 335 and 336 as shown. The short to medium range wireless communication circuitry 329 may also couple to one or more antennas, such as antennas 337 and 338 as shown. Alternatively, the short to medium range wireless communication circuitry 329 may couple to the antennas 335 and 336 in addition to, or instead of, coupling to the antennas 337 and 338. The short to medium range wireless communication circuitry 329 may include multiple receive chains and/or multiple transmit chains for receiving and/or transmitting multiple spatial streams, such as in a multiple-input multiple output (MIMO) configuration. Some or all components of the short to medium range wireless communication circuitry 329 and/or the cellular communication circuitry 330 may be used for wireless communications, e.g., using WLAN, Bluetooth, and/or cellular communications.

As shown, the SOC 300 may include processor(s) 302, which may execute program instructions for the client station 106 and display circuitry 304, which may perform graphics processing and provide display signals to the display 360. The SOC 300 may also include motion sensing circuitry 370 which may detect motion of the client station 106, for example using a gyroscope, accelerometer, and/or any of various other motion sensing components. The processor(s) 302 may also be coupled to memory management unit (MMU) 340, which may be configured to receive addresses from the processor(s) 302 and translate those addresses to locations in memory (e.g., memory 306, read only memory (ROM) 350, NAND flash memory 310) and/or to other circuits or devices, such as the display circuitry 304, cellular communication circuitry 330, short range wireless communication circuitry 329, connector interface (I/F) 320, and/or display 360. The MMU 340 may be configured to perform memory protection and page table translation or set up. In some embodiments, the MMU 340 may be included as a portion of the processor(s) 302.

As noted above, the client station 106 may be configured to communicate wirelessly directly with one or more neighboring client stations. The client station 106 may be configured to communicate according to a WLAN RAT for communication in a WLAN network, such as that shown in Figure 3 or in Figure 1.

As described herein, the client station 106 may include hardware and software components for implementing the features described herein. For example, the processor 302 of the client station 106 may be configured to implement part or all of the features described herein, e.g., by executing program instructions stored on a memory medium (e.g., a non-transitory computer-readable memory medium). Alternatively (and/or in addition), processor 302 may be configured as a programmable hardware element, such as an FPGA (Field Programmable Gate Array), or as an ASIC (Application Specific Integrated Circuit). Alternatively (and/or in addition) the processor 302 of the UE 106, in conjunction with one or more of the other components 300, 304, 306, 310, 315, 320,329, 330, 335, 336, 337, 338, 340, 350, 360, 370 may be configured to implement part or all of the features described herein.

In addition, as described herein, processor 302 may include one or more processing elements. Thus, processor 302 may include one or more integrated circuits (ICs) that are configured to perform the functions of processor 302. In addition, each integrated circuit may include circuitry (e.g., first circuitry, second circuitry, etc.) configured to perform the functions of processor(s) 204.

Further, as described herein, cellular communication circuitry 330 and short-range wireless communication circuitry 329 may each include one or more processing elements. In other words, one or more processing elements may be included in cellular communication circuitry 330 and also in short range wireless communication circuitry 329. Thus, each of cellular communication circuitry 330 and short-range wireless communication circuitry 329 may include one or more integrated circuits (ICs) that are configured to perform the functions of cellular communication circuitry 330 and short-range wireless communication circuitry 329, respectively. In addition, each integrated circuit may include circuitry (e.g., first circuitry, second circuitry, etc.) configured to perform the functions of cellular communication circuitry 330 and short-range wireless communication circuitry 329.

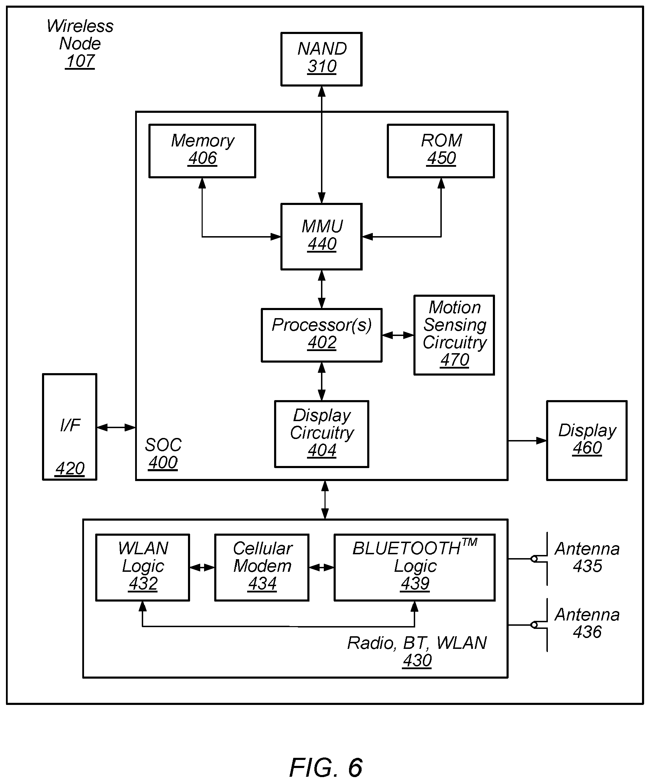

### Figure 6 - Wireless Node Block Diagram

Figure 6 illustrates one possible block diagram of a wireless node 107, which may be one possible exemplary implementation of the device 106 illustrated in Figure 5. As shown, the wireless node 107 may include a system on chip (SOC) 400, which may include portions for various purposes. For example, as shown, the SOC 400 may include processor(s) 402 which may execute program instructions for the wireless node 107, and display circuitry 404 which may perform graphics processing and provide display signals to the display 460. The SOC 400 may also include motion sensing circuitry 470 which may detect motion of the wireless node 107, for example using a gyroscope, accelerometer, and/or any of various other motion sensing components. The processor(s) 402 may also be coupled to memory management unit (MMU) 440, which may be configured to receive addresses from the processor(s) 402 and translate those addresses to locations in memory (e.g., memory 406, read only memory (ROM) 450, flash memory 410). The MMU 440 may be configured to perform memory protection and page table translation or set up. In some embodiments, the MMU 440 may be included as a portion of the processor(s) 402.

As shown, the SOC 400 may be coupled to various other circuits of the wireless node 107. For example, the wireless node 107 may include various types of memory (e.g., including NAND flash 410), a connector interface 420 (e.g., for coupling to a computer system, dock, charging station, etc.), the display 460, and wireless communication circuitry 430 (e.g., for 5GNR, LTE, LTE-A, Bluetooth, Wi-Fi, NFC, GPS, etc.).

The wireless node 107 may include at least one antenna, and in some embodiments, multiple antennas 435 and 436, for performing wireless communication with base stations and/or other devices. For example, the wireless node 107 may use antennas 435 and 436 to perform the wireless communication. As noted above, the wireless node 107 may in some embodiments be configured to communicate wirelessly using a plurality of wireless communication standards or radio access technologies (RATs).

The wireless communication circuitry 430 may include Wi-Fi Logic 432, a Cellular Modem 434, and Bluetooth Logic 439. The Wi-Fi Logic 432 is for enabling the wireless node 107 to perform Wi-Fi communications, e.g., on an 802.11 network. The Bluetooth Logic 439 is for enabling the wireless node 107 to perform Bluetooth communications. The cellular modem 434 may be capable of performing cellular communication according to one or more cellular communication technologies. Some or all components of the wireless communication circuitry 430 may be used for wireless communications, e.g., using WLAN, Bluetooth, and/or cellular communications.

As described herein, wireless node 107 may include hardware and software components for implementing embodiments of this disclosure. For example, one or more components of the wireless communication circuitry 430 (e.g., Wi-Fi Logic 432) of the wireless node 107 may be configured to implement part or all of the methods described herein, e.g., by a processor executing program instructions stored on a memory medium (e.g., a non-transitory computer-readable memory medium), a processor configured as an FPGA (Field Programmable Gate Array), and/or using dedicated hardware components, which may include an ASIC (Application Specific Integrated Circuit).

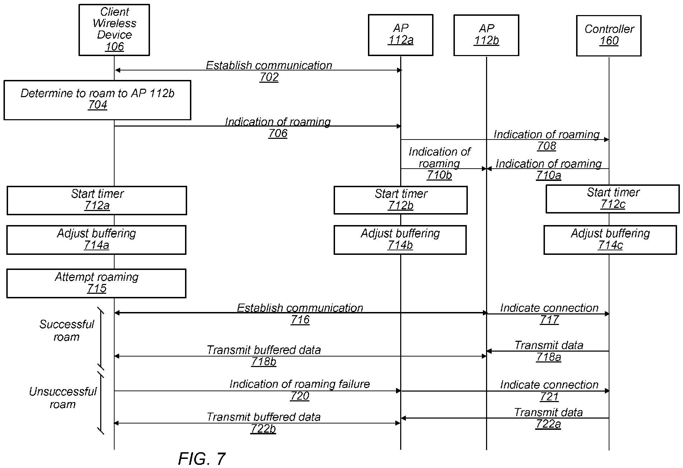

### Figure 7 - Client/STA assisted roaming

Fast roaming may be standardized in and IEEE 802.11 specification, such as 802.11r. According to fast roaming techniques, a client wireless device ("client") determines to roam from one AP (e.g., of a network with multiple APs) to another AP (e.g., of the same network). In existing fast roaming techniques, the client does not notify its current serving AP about its intent to roam. Furthermore, the current serving AP does not know when or if the client has left its basic service set (BSS).

As one result of the conventional techniques, wireless resources may be wasted. For example, the current serving AP may continue transmitting packets to the client, e.g., after the client has roamed to a different (new) AP or is in a poor service area relative to the current serving AP. For example, the client may be in a poor signal strength (e.g., received signal strength indication (RSSI), signal to noise ratio (SNR), etc.) region (e.g., which may be why the client is roaming) relative to the AP from which it roamed. Thus, the client may not receive transmitted data/packets correctly. Furthermore, once the client has successfully roamed, transmitting the buffered packets to the client consumes resources that could be used to serve a different client.

As another result, data loss for the client may occur. For example, after a client roams and connects to a new AP, the packets buffered at the AP from which the client roamed may be lost (e.g., they may be transmitted when the client is no longer able to receive them or they may not be transmitted at all). This may negatively impact user experience (e.g., video stall during streaming or video call, interruption of any application, etc.).

For example, packet loss at the client may occur when a current serving AP continues buffering packets for this client after the client has roamed to another AP, e.g., a target AP. The buffered packets at the current serving AP will not be delivered after the client has roamed. Another possible reason for the packet loss may be that the client is in a poor SNR-region (e.g., and therefore considering roaming). Packets buffered at the current serving AP may not be deliverable because the signal quality at the client is insufficient.

Embodiments described herein provide systems, methods, and apparatuses which may be used to reduce or avoid resource waste and/or data loss associated with a client roaming between APs. For example, a wireless device may inform the serving (e.g., source) AP of its intent to roam to a new (e.g., target) AP. Methods described herein prevent or reduce the loss of data (e.g., packets buffered at the source AP). As a result, these methods can improve user experience by ameliorating data loss and associated impacts (e.g., video stall, etc.).

Aspects of the method of Figure 7 may be implemented by one or more APs in communication with a wireless device (e.g., STA) and/or a controller associated with multiple APs. The AP, wireless device, and/or controller may be as illustrated in and described with respect to various ones of the Figures herein, or more generally in conjunction with any of the computer circuitry, systems, devices, elements, or components shown in the above Figures, among others, as desired. For example, a processor (and/or other hardware) of such a device may be configured to cause the device to perform any combination of the illustrated method elements and/or other method elements. For example, one or more processors (or processing elements) (e.g., processor(s) 101, 204, 302, 402, 432, 434, 439, 1301, baseband processor(s), processor(s) associated with communication circuitry such as 130, 230, 232, 329, 330, 430, 1330, etc., among various possibilities) may cause a wireless device, STA, UE, controller, and/or AP, or other device to perform such method elements.

Note that while at least some elements of the method of Figure 7 are described in a manner relating to the use of communication techniques and/or features associated with IEEE and/or 802.11 (e.g., 802.11r, 802.1 1be, 802.1 1bx, Wi-Fi 8, etc.) specification documents, such description is not intended to be limiting to the disclosure, and aspects of the method of Figure 7 may be used in any suitable wireless communication system, as desired.

The methods shown may be used in conjunction with any of the systems, methods, or devices shown in the Figures, among other devices. In various embodiments, some of the method elements shown may be performed concurrently, in a different order than shown, or may be omitted. Additional method elements may also be performed as desired. As shown, this method may operate as follows.

A client wireless device 106 establishes first communication with a serving AP 112a (702), according to some embodiments. The serving AP may be one of a plurality of APs (e.g., a roaming set) managed by a controller 160, including at least AP 112b. The communication may be wireless communication according to an 802.11 standard.

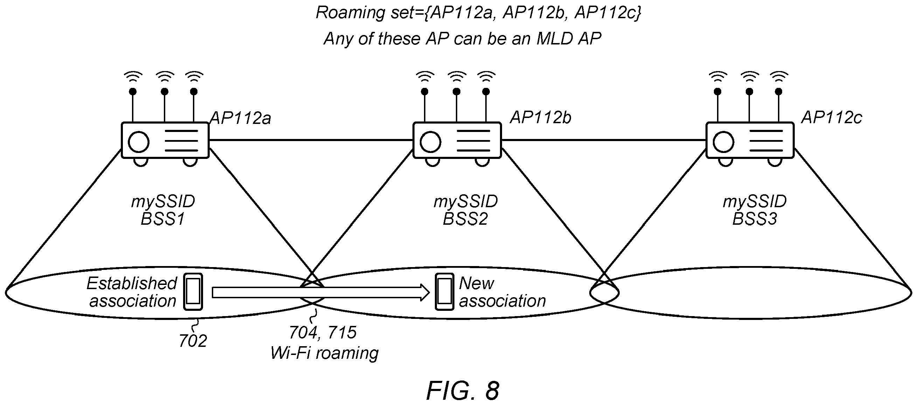

Figure 8 illustrates a roaming situation in which methods of Figure 7 may be applied, according to some embodiments. As shown, a roaming set may consist of APs 112a, 112b, and 112c. These APs may be managed by a controller 160 (not shown in Figure 8) and may be wired and/or wirelessly connected to the controller. The APs in the roaming set may belong to a same network (e.g., with a common extended SSID (ESSID). The APs in the roaming set may all advertise/use a common SSID (e.g., "mySSID"). Each of the APs may use its own BSS, according to some embodiments. At 702, the client device has an established association with AP 112a using BSS1.

The client may use pairwise temporal key (PTK) with the APs in the roaming set. In some embodiments, different PTKs may be used for different APs (e.g., the client may use a unique PTK for unique APs). In other embodiments, a PTK may be shared between multiple APs.

The client identification by APs in the roaming set may use a client media access control (MAC) address and/or any other identifier (e.g., such as may be generated by the controller 160), according to some embodiments. For example, the controller 160 may generate unique client identifiers for use in a transition table (e.g., to track roaming clients and/or packet buffering for such clients).

The client determines to roam (e.g., switch) to AP 112b (704), according to some embodiments. For example, the client may perform signal strength measurements (e.g., RSSI, SNR, SINR, etc.) and/or measure other characteristics of AP 112a and/or AP 112b. The client may determine to roam to AP 112b based on one or more of the measurements. The client may compare the measurement(s) to corresponding threshold(s) to determine whether to roam. For example, the determination to roam may be based on a measurement of signal strength of AP 112a falling below a first threshold, a measurement of signal strength of AP 112b exceeding a second threshold (e.g., or exceeding the strength of 112a), etc. The determination may be based on other or additional factors, such as location and/or motion of the client, past experience with the APs, etc.

In the example of Figure 8, this determination to roam occurs in or near an area of overlap between the coverage areas of serving AP 112a and target AP 112b, according to some embodiments.

In some embodiments, the client may further determine an amount of time (e.g., a duration) for which to request the serving AP 112a to not send data, e.g., while the client is attempting to roam to AP 112b. In some implementations, the amount of time is based on any one of, or any combination of: application(s) or application type(s) associated with traffic between the client and the AP, jitter tolerance of the application(s), expected downlink traffic, location of the client, motion of the client, buffered data at the AP 112a, buffered data at the client, signal conditions with respect to AP 112a and/or AP 112b, expected amount of time to complete the switch to AP 112b, values (e.g., default, maximum, etc.) set in one or more standards, or any other factor(s) influencing the time for a client to roam between APs.

The client transmits an indication of roaming to the serving AP 112a (706), according to some embodiments. The indication may be transmitted in response to the determination to roam (e.g., 704). Any of various types of frames/messages may be used to provide the indication.

In some embodiments, a message including the indication includes an identifier of the client (e.g., the MAC address) and/or an identifier of the target AP (e.g., BSSID).

In some embodiments, the client transmits the indication of roaming (or roaming indication) to the target AP 112b instead of, or in addition to, the serving AP 112a.

In some embodiments, the client uses a BSS transition management (BTM) response frame. Figure 12 illustrates an example BTM response frame, according to some embodiments. The BTM response frame can be transmitted (e.g., in 704) without solicitation by the AP. In other words, the BTM response frame need not be responsive to a previous BTM frame from the AP to the client; instead, the BTM response frame can be autonomously transmitted by the client.

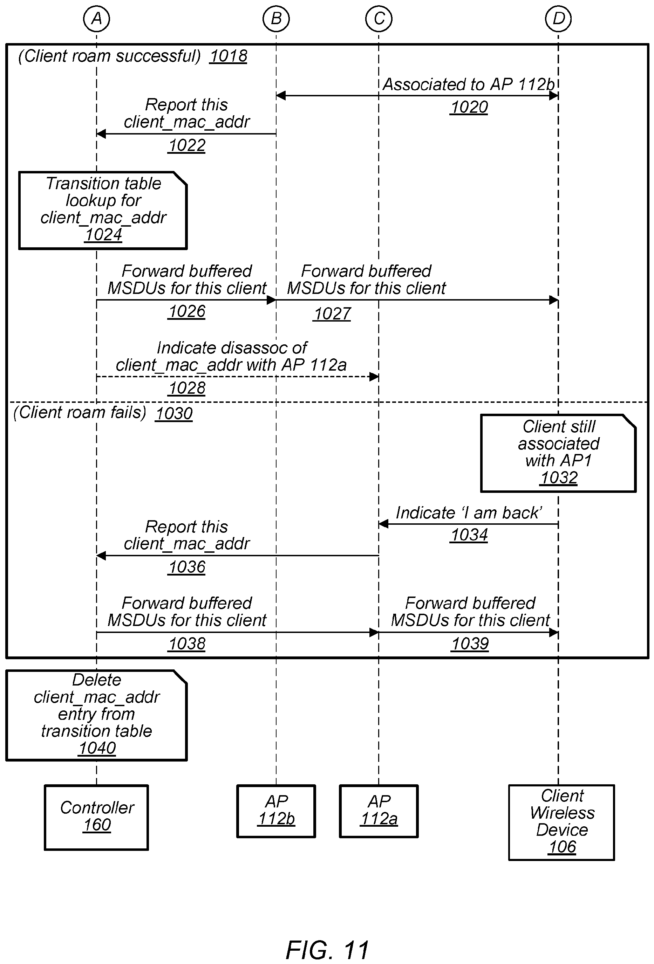

New BTM status codes can be introduced to indicate intent to roam (e.g., as in 704) and/or to withdraw a previous indication of intent to roam (e.g., as further discussed below with respect to Figure 11). These codes may be referred to as "Intent to Roam-Confirm" and "Intent to Roam-Rescind", respectively, among various possibilities.

In some embodiments, the BSS termination delay field can be repurposed to indicate the time duration for which the client requests the AP 112a not to send data/packets (e.g., as determined in 704). The amount of time may be indicated in seconds, milliseconds, or any other desired unit.

In some embodiments, a duration is not determined in 704 or indicated in 706. Instead, a default duration is used (e.g., as set in an 802.11 standard, etc.)

In some embodiments, a new type of frame can be used to provide the indication. Such a new type of frame can include any combination of the information discussed above with respect to the indication (e.g., 706) and/or the BTM response frame. For example, such a new frame may include any/all of a status code (e.g., intent to roam), a target BSSID, requested time duration for the serving AP to not send any packets because of the planned roaming attempt, etc.

The AP 112a receives the indication of roaming.

In response to receiving the roaming indication, the AP 112a transmits a further indication of roaming (or roaming indication) to the controller 160 (708), according to some embodiments. The further indication may include any/or all of the information included in the received roaming indication (e.g., of 706). For example, the further indication may include any / all of a status code (e.g., intent to roam), a target BSSID, a requested time duration for the serving AP to not send any packets because of the planned roaming attempt, etc.

If desired, either or both of the AP 112a and/or the controller may transmit an indication of roaming to the target AP 112b (710, 710b), according to some embodiments.

In some embodiments, the client 106 and/or AP 112a (e.g., each, individually) start a timer (712a, 712b). The duration of the timer may be set to the duration for which the AP112a is requested not to transmit data to the client, e.g., due to the roaming attempt (e.g., determined in 704 and indicated in 706). In some embodiments, the timer is started in response to the indication of roaming (706).

The timer can be started at a time indicated in the indication of roaming. Alternatively, the timer can be started at the time the indication of roaming is transmitted or at an offset after the transmission time.

In some embodiments, AP 112b and/or controller 160 start a corresponding timer (e.g., 712c).

Further, the client 106, AP 112a, and/or controller 160 may adjust buffering (714a, 714b, 714c) in response to the indication of roaming (e.g., 706, 708).

The buffering adjustment can begin when the timer (712a-c) is started or within a predetermined duration of starting the timer. The adjustment may last until expiration of the timer or a resolution (e.g., successful or unsuccessful conclusion of the indicated roaming attempt by the client).

At the client, the adjustment (714a) includes the client pausing transmission of uplink data to the AP 112a. Instead, the client buffers this data locally, e.g., for transmission after the roaming attempt is resolved (e.g., to the AP 112b if roaming is successful or to the AP 112a if roaming is unsuccessful).

At the source AP 112a, the adjustment (714b) includes the AP pausing transmission of downlink data to the client. Instead, the AP 112a may provide previously buffered data to the controller for transmission after the roaming attempt is resolved (e.g., via the AP 112b if roaming is successful or via AP 112a if roaming is unsuccessful). The source AP 112a may also stop fetching any further packets from the controller for the client.

At the controller, the adjustment (714c) includes the controller pauses providing downlink data to the AP 112a. Instead, the controller buffers the data, e.g., for transmission after the roaming attempt is resolved (e.g., via the AP 112b if roaming is successful or via AP 112a if roaming is unsuccessful). Further, the controller can receive one or more items of data from the AP 112a that were previously buffered at the AP 112a for transmission to the client, which the controller can buffer for transmission after the roaming attempt is resolved.

In some embodiments, the controller maintains a transition table or other data structure to track information about roaming client devices. Accordingly, the controller creates an entry for the intended roaming of client 106. In some implementations, the entry may be a tuple. For example, the entry includes an identifier (e.g., MAC address) associated with the client and a location/address of downlink data buffered for the client. In some other implementations, additional and/or different information may be stored as desired.

In some embodiments, instead of (or in addition to) the controller buffering downlink data for the client, the downlink data may be provided by the AP 112a and/or controller 160 to the target AP 112b, e.g., for transmission after the roaming attempt is resolved (e.g., via the AP 112b if roaming is successful or by returning it to the AP 112a for transmission to the client if roaming is unsuccessful).

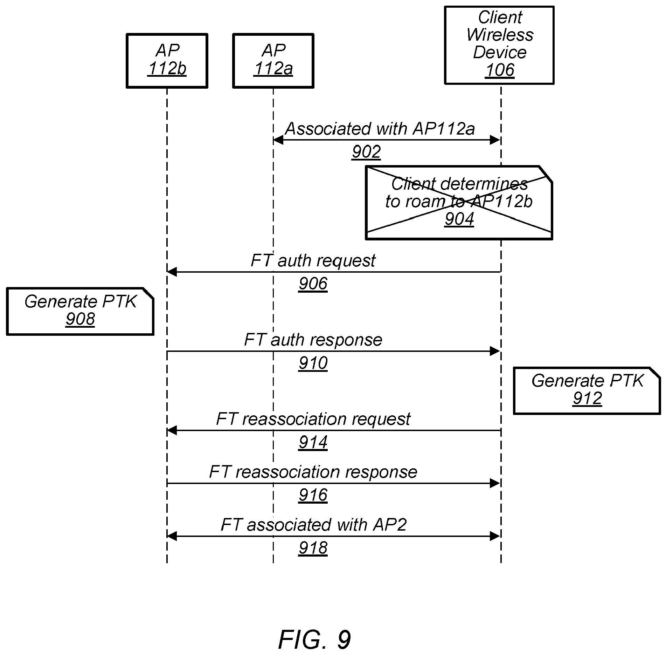

The client attempts to roam (e.g., switch) from AP 112a to target AP 112b (715). The roaming attempt may be performed at a similar time and/or location as the determination to roam (e.g., 704), as shown in Figure 8, according to some embodiments. In some embodiments, the roaming attempt may be performed according to modified fast roaming techniques, e.g., as illustrated in Figure 9.

Figure 9 illustrates a version of fast roaming, e.g., as may be used in 715, according to some embodiments. The client 106 may be initially associated with AP 112a (902, e.g., as in 702-714), according to some embodiments. According to fast roaming as in 802.11r, the client determines to roam (904). According to methods of Figure 7, the determination to roam has occurred (e.g., 704) and been indicated (e.g., 706, 708, 710), serving as the roaming determination (904).

The client transmits a fast transition (FT) authorization request to the target AP 112b (906), according to some embodiments.

The target AP 112b generates PTK information for the client (908). In some embodiments, the PTK is generated in response to the authorization request.

The target AP 112b transmits an authorization response to the client (910), e.g., in response to the authorization request. The response may include information sufficient for the client to generate PTK.

The client may generate PTK (912), e.g., using information in the authorization response. The PTK generated by the client may correspond to the PTK generated by the target AP 112b.

The client 106 may transmit a reassociation request to the AP 112b (914), which can receive the request and transmit a reassociation response (916) to the client.

When the roaming is successful, the AP 112b and the client 106 are associated (918). Thus, the client and AP 112b establish communication.

It will be appreciated that, in the methods of Figure 7, a roaming attempt (e.g., in 715) may be either successful or unsuccessful. A roaming attempt is unsuccessful when the attempt to establish communication with the target AP (e.g., 112b) is unsuccessful, e.g., prior to expiration of a timer (712). For example, a roaming attempt may be unsuccessful if any of the messages 906, 910, 914, or 916 are not received successfully. In Figure 7, 716-718 illustrate the method in the case of a successful roaming attempt while 720-722 illustrate the method in the case of an unsuccessful roaming attempt.

In the case of a successful roaming attempt, the client and target AP 112b establish communication (716, 918). In response, the AP 112b indicates to the controller that communication with the client is established (717). The controller thus determines that the roaming attempt is successful. In some embodiments, the controller and/or AP 112b may inform the source AP 112a of the successful roaming.

The controller, AP 112b, and client may transmit any buffered data (718a, 718b). For example, the controller may provide any downlink data buffered at the controller to the AP 112b (718a). The client and AP 112b may exchange any uplink and/or downlink data buffered (e.g., at the client, AP, and/or controller) during the roaming attempt (e.g., during the period of adjusted buffering discussed with respect to 714). The transmission of buffered data via the target AP 112b may be in response to a determination that the roaming is successful.

In the case of an unsuccessful roaming attempt, the client and source AP 112a maintain communication. Further, the client may indicate the roaming failure to the source AP 112a (720).

As noted above, the roaming failure may be indicated with a BTM response frame and/or other message(s). A BTM status code may be set to "Intent to Roam-Rescind" or a similar indication that the roaming is not complete. In some embodiments, a roaming failure indication may include further details about whether, when, and/or under what conditions the roaming to the target AP may be re-attempted. In some embodiments, the roaming failure indication may include an indication of a reason that the roaming was unsuccessful.

In response, the AP 112a may indicate to the controller that communication with the client is maintained and/or that the roaming is unsuccessful (721), according to some embodiments. The controller may thus determine that the roaming attempt is not successful. In some embodiments, the controller and/or AP 112a may inform the target AP 112b of the unsuccessful roaming. The client, AP 112a, and/or controller may stop the timer (e.g., started in 712) in response to determining that the roaming is unsuccessful.

The controller, AP 112a, and client may transmit any buffered data (722a, 722b), according to some embodiments. For example, the controller may provide any downlink data buffered at the controller to the AP 112a (722a). If data is buffered at the target AP 112b, that data may also be provided to the source AP 112a (e.g., directly and/or via the controller or other path). The client and AP 112a may exchange any uplink and/or downlink data buffered (e.g., at the client, AP 112a, AP 112b, and/or controller) during the roaming attempt (e.g., during the period of adjusted buffering discussed with respect to 714). The transmission of buffered data via the source AP 112a may be in response to a determination that the roaming is unsuccessful, e.g., as of expiration of the timer.

### Figures 10 and 11

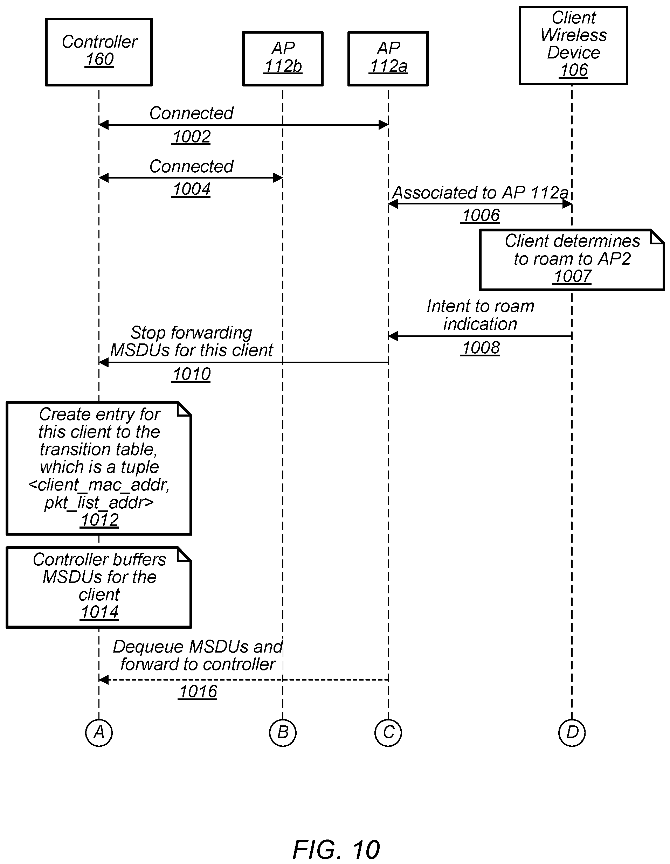

Figures 10 and 11 illustrate an example of the method of Figure 7, according to some embodiments. Note that Figure 11 is a continuation of Figure 10, e.g., the lines from Figure 10 continue from a, b, c, and d as indicated on Figure 11.

As shown in Figure 10, controller 160 may be connected to an AP 112a (1002) and AP 112b (1004), according to some embodiments. A client 106 may be associated with AP 112a (1006, 702), according to some embodiments.

The client may determine to roam to AP 112b (1007, 704), according to some embodiments. For example, the determination may be based on signal strength of the APs as measured by the client, among various possibilities.

The client may indicate intent to roam (1008, 706) to the AP 112a, according to some embodiments. The indication may optionally specify the target AP (e.g., 112b), requested duration for adjusted buffering due to the roaming, and/or other information. The client may start a timer for the duration (e.g., a requested duration, default duration, etc.).

The AP 112a may indicate to the controller to stop forwarding data (e.g., MAC service data units (MSDUs)) for the client 106 (1010, 708), according to some embodiments.

In response, the controller may adjust buffering for the client and may create an entry in a transition table to note where data is buffered for the client (1012, 714c), according to some embodiments. The controller may buffer data for the client at the indicated location(s) (1014, 714c). The controller may start a timer for the duration (e.g., a requested duration, default duration, etc.).

The AP 112a may transfer buffered data for the client to the controller and may remove that data from its transmission queue (1016, 714b), according to some embodiments. The controller may add this data at the location indicated in the entry. It will be appreciated that the transfer of data in 1016 may be performed at the same time (in the same message and/or in one or more different and/or additional message(s)) or a different time as the indication of roaming (1010, 708), according to some embodiments.

Figure 11 illustrates the case that the roaming is successful in 1018-1028 and the case that the roaming is not successful in 1030-1038, according to some embodiments.

In the case that roaming is successful, the client may associate with the target AP 112b (1020), according to some embodiments.

The AP 112b may indicate the establishment of communication with the client to the controller (1022), according to some embodiments. The indication may be in response to the association. The indication may identify the client, e.g., by MAC address or other identifier.

The controller may retrieve information about the client and/or roaming attempt (1024), according to some embodiments. For example, the controller may look up the client in the transition table, e.g., by using the MAC address provided in the indication (e.g., 1022). For example, the controller may retrieve buffered downlink data for the client.

The controller may provide buffered data for the client to the AP 112b (1026), according to some embodiments. The AP 112b may in turn provide the buffered data to the client (1027), according to some embodiments.

The controller may transmit an indication to the source AP 112a that the client is associated with the target AP 112b and/or is disassociated with the AP 112a (1028), according to some embodiments. This indication may be transmitted at the same time, earlier, or later than the data is forwarded (e.g., 1026). The indication may include an identifier (e.g., MAC address of the client).

In some embodiments, in response to the indication, the AP 112a may provide any data that it has buffered for the client (e.g., to the controller and/or AP 112b, which may in turn provide it to the client).

In some embodiments, in response to the indication, the AP 112a may clear some or all memory/records associated with the client 106. This may help the AP 112a use its memory/resources more efficiently to serve other clients.

The controller may further clear its records associated with the client 106 and/or the roaming (1040), according to some embodiments. For example, the controller may delete an entry (e.g., created in 1012) in its transition table associated with the client's roaming attempt.

In the case that roaming is not successful, the client may remain associated with and/or reassociate with the source AP 112a (1032), according to some embodiments. For example, the client may determine that roaming to the target AP 112b is unsuccessful in response to failing to connect to the target AP 112b prior to (or at) expiration of a timer associated with the roaming.

The client may transmit a message to the AP 112a to indicate that the connection will be maintained and/or that the roaming is unsuccessful (1034), according to some embodiments. The message may be transmitted in response to a determination that roaming is unsuccessful, e.g., upon expiration of the timer.

The AP 112a may indicate to the controller (and/or the target AP 112b) that the client is associated with the AP 112a (1036), according to some embodiments. The indication may identify the client (e.g., using a MAC address).

The controller may provide buffered data for the client to the AP 112a (1038), according to some embodiments. The AP 112a may in turn provide the buffered data to the client (1039), according to some embodiments.

The controller may further clear its records associated with the client 106 and/or the roaming (1040), according to some embodiments. For example, the controller may delete an entry (e.g., created in 1012) in its transition table associated with the client's roaming attempt.

### Figure 13

Figure 13 illustrates an exemplary controller 160 that may be configured for use in conjunction with various aspects of the present disclosure. The controller 160 may be any of a variety of types of device and may be configured to perform any of a variety of types of functionality. The controller 160 may be a substantially portable device or may be a substantially stationary device, potentially including any of a variety of types of device. The controller 160 may be configured to perform one or more wireless communication techniques or features, such as any of the techniques or features illustrated and/or described subsequently herein with respect to any or all of the Figures. The controller 160 may be housed in or with an AP 112 or may be housed separately.

As shown, the controller 160 may include a processing element 1301. The processing element may include or be coupled to one or more memory elements. For example, the controller 160 may include one or more memory media (e.g., memory 1305), which may include any of a variety of types of memory and may serve any of a variety of functions. For example, memory 1305 could be RAM serving as a system memory for processing element 1301. Other types and functions are also possible.

Additionally, the controller 160 may include wired and/or wireless communication circuitry 1330. The communication circuitry may include any of a variety of communication elements (e.g., antenna(s) for wireless communication, analog and/or digital communication circuitry/controllers, etc.) and may enable the device to communicate using one or more (e.g., wired and/or wireless) communication protocols.

The controller 160 may use communication circuitry 1330 to communicate with any number of APs (e.g., managed/controlled by controller 160) and/or the internet. In some embodiments, the APs managed/controlled by controller 160 may share a common identifier, e.g., an extended service set identifier (ESSID). The controller 160 may manage a network of APs, e.g., in an airport, campus, hospital, etc.

The controller 160 may additionally include any of a variety of other components (not shown) for implementing device functionality, depending on the intended functionality of the controller 160, which may include further processing and/or memory elements, one or more power supply elements (which may rely on battery power and/or an external power source) user interface elements (e.g., display, speaker, microphone, camera, keyboard, mouse, touchscreen, etc.), and/or any of various other components.

The components of the controller 160, such as processing element 1301, memory 1305, and communication circuitry 1330, may be operatively coupled via one or more interconnection interfaces, which may include any of a variety of types of interface, possibly including a combination of multiple types of interface. As one example, a USB high-speed inter-chip (HSIC) interface may be provided for inter-chip communications between processing elements. Alternatively (and/or in addition), a universal asynchronous receiver transmitter (UART) interface, a serial peripheral interface (SPI), inter-integrated circuit (I2C), system management bus (SMBus), and/or any of a variety of other communication interfaces may be used for communications between various device components. Other types of interfaces (e.g., intra-chip interfaces for communication within processing element 1301, peripheral interfaces for communication with peripheral components within or external to controller 160, etc.) may also be provided as part of controller 160.

### Additional information

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

In one set of embodiments, a method may include: at a wireless device: establishing communication with a first access point (AP), wherein the first AP is among a first group of APs managed by a controller; determining to roam from the first AP to a second AP among the first group of APs; transmitting, to the first AP, an indication of intent to roam; establishing communication with the second AP; and receiving, from the second AP, first downlink data.

In some embodiments, establishing communication with the second AP is subsequent to transmitting the indication of intent to roam; and the first downlink data is buffered at the controller subsequent to transmitting the indication of intent to roam.

In some embodiments, the method further comprising: buffering first uplink data subsequent to transmitting the indication of intent to roam and prior to establishing communication with the second AP; and transmitting, to the second AP, the first uplink data.

In some embodiments, the method further comprising: starting a timer in response to transmitting the indication of intent to roam.

In some embodiments, the method further comprising: determining a duration for the timer.

In some embodiments, the method further comprising: transmitting, to the first AP, the duration for the timer.

In some embodiments, establishing communication with the second AP comprises: transmitting, to the second AP, an authorization request; receiving, from the second AP, an authorization response; determining a pairwise temporal key (PTK) to use with the second AP; transmitting, to the second AP, a reassociation request; and receiving, from the second AP, a reassociation response.

In some embodiments, a first pairwise temporal key (PTK) is used with the first AP and a second PTK is used with the second AP, the second PTK different from the first AP.

In some embodiments, a same pairwise temporal key (PTK) is used with both the first AP and the second AP.

In some embodiments, determining to roam from the first AP to the second AP is based at least in part on one or more of: a measurement of signal strength of the first AP; or a measurement of signal strength of the second AP.

In some embodiments, determining to roam from the first AP to the second AP is based at least in part on a measurement of signal strength of the first AP.

In some embodiments, determining to roam from the first AP to the second AP is based at least in part on a measurement of signal to noise ratio of the first AP.

In some embodiments, determining to roam from the first AP to the second AP is based at least in part on a measurement of signal to noise ratio of the second AP.

In some embodiments, the indication of intent to roam comprises an indication that the second AP is the target AP, e.g., that the intended roaming is from the first AP to the second AP.

In some embodiments, the indication of intent to roam comprises a basic service set (BSS) transition management (BTM) frame.

In some embodiments, the indication of intent to roam comprises an indication of a basic service set (BSS) identifier (BSSID) of the second AP.

In one set of embodiments, a method may include: at a wireless device: establishing communication with a first access point (AP), wherein the first AP is among a first group of APs managed by a controller; determining to roam from the first AP to a second AP among the first group of APs; transmitting, to the first AP, an indication of intent to roam; performing an attempt to establish communication with the second AP; determining that the attempt to establish communication with the second AP is not successful; and in response to determining that the attempt to establish communication with the second AP is not successful, transmitting, to the first AP, an indication that the attempt to establish communication with the second AP is not successful.

In some embodiments, the indication that the attempt to establish communication with the second AP is not successful comprises a basic service set (BSS) transition management (BTM) frame.

In some embodiments, the BTM frame comprises a new status code (e.g., as described herein).

In some embodiments, the indication of intent to roam comprises an indication that the second AP is the target AP, e.g., that the intended roaming is from the first AP to the second AP.

In some embodiments, the method further comprising: starting a timer in response to transmitting the indication of intent to roam, wherein determining that the attempt to establish communication with the second AP is not successful is performed upon expiration of the timer.

In one set of embodiments, a method may comprise: at a first access point (AP): establishing communication with a controller, wherein the first AP is among a first group of APs managed by the controller; establishing communication with a first wireless device; receiving, from the first wireless device, a first indication of intent to roam from the first AP to a second AP among the first group of APs; and in response to the first indication of intent to roam: transmitting, to the controller, a second indication to stop forwarding data for the first wireless device; removing at least one unit of data from a queue for transmission to the first wireless device; and transmitting, to the controller, the at least one unit of data.

In some embodiments, the method further comprising: receiving, from the controller, a third indication, the third indication comprising at least one of: an instruction to disassociate with the first wireless device; or an indication that the client has roamed out of a basic service set of the first AP.

In some embodiments, the third indication is in response to the first wireless device establishing communication with the second AP.

In some embodiments, further comprising: receiving, from the first wireless device, a third indication to rescind the intent to roam.

In some embodiments, further comprising, in response to the third indication: transmitting, to the controller, a fourth indication to resume forwarding data for the first wireless device; receiving, from the controller, the at least one unit of data; and transmitting, to the first wireless device, the at least one unit of data.

In one set of embodiments, a method may comprise: at a second access point (AP): establishing communication with a controller, wherein the second AP is among a first group of APs managed by the controller; establishing communication with a first wireless device; transmitting, to the controller, a first indication of establishing communication with the first wireless device; receiving, from the controller, first downlink data for the first wireless device; and transmitting, to the first wireless device, the first downlink data.

In some embodiments, the first downlink data is associated with a time period that is: subsequent to a previous indication of intent from the first wireless device to roam to the second AP; and prior to the first indication of establishing communication with the first wireless device.

In one set of embodiments, a method may comprise: at a controller: establishing communication with a first access point (AP), wherein the first AP is among a first group of APs managed by the controller; establishing communication with a second AP among the first group of APs; receiving, from the first AP, a first indication to stop forwarding data for a first wireless device; and in response to the first indication, buffering at least one unit of data for transmission to the first wireless device.

In some embodiments, further comprising: receiving, from the second AP, a second indication that the first wireless device has established communication with the second AP; and in response to the second indication, transmitting, to the second AP, the at least one unit of data for transmission to the first wireless device.

In some embodiments, further comprising: in response to the second indication, transmitting, to the first AP, a third indication to disassociate with the first wireless device.

In some embodiments, further comprising: in response to the first indication, creating an entry in a transition table, the entry comprising: an identifier of the first wireless device; and a location where the at least one unit of data for transmission to the first wireless device is buffered.

In some embodiments, further comprising: in response to the second indication, deleting the entry.

In some embodiments, further comprising: receiving, from the first AP, a second indication that the first wireless device has maintained communication with the first AP; and in response to the second indication, transmitting, to the first AP, the at least one unit of data for transmission to the first wireless device.

Any of the methods described herein for operating a wireless device may be the basis of a corresponding method for operating an AP and vice versa, e.g., by interpreting each message/signal X received by the wireless device in the downlink as message/signal X transmitted by the AP, and each message/signal Y transmitted in the uplink by the wireless device as a message/signal Y received by the AP. Moreover, a method described with respect to an AP may be interpreted as a method for a wireless device in a similar manner. Similarly, any of the methods described above may be interpreted as a method for a controller.

Embodiments of the present disclosure may be realized in any of various forms. For example, some embodiments may be realized as a computer-implemented method, a computer-readable memory medium, or a computer system. Other embodiments may be realized using one or more custom-designed hardware devices such as ASICs. Other embodiments may be realized using one or more programmable hardware elements such as FPGAs.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a wireless device may be configured to include a processor (and/or a set of processors) and a memory medium, where the memory medium stores program instructions, where the processor is configured to read and execute the program instructions from the memory medium, where the program instructions are executable to cause the wireless device to implement any of the various method embodiments described herein (or, any combination of the method embodiments described herein, or, any subset of any of the method embodiments described herein, or, any combination of such subsets). The device may be realized in any of various forms.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method, comprising:
at a wireless device:
communicating with a first access point (AP), wherein the first AP is associated with a first group of APs managed by a controller;
determining to roam from the first AP to a second AP associated with the first group of APs;
transmitting, to the first AP, an indication of intent to roam;
establishing communication with the second AP; and
receiving, from the second AP, first downlink data.

2. The method of claim 1, wherein:
establishing communication with the second AP is performed subsequent to transmitting the indication of intent to roam; and
the first downlink data is buffered at the controller subsequent to transmitting the indication of intent to roam.

3. The method of claim 2, further comprising:
buffering first uplink data subsequent to transmitting the indication of intent to roam and prior to establishing communication with the second AP; and
transmitting, to the second AP, the first uplink data after establishing communication with the second AP.

4. The method of claim 1, further comprising:
starting a timer corresponding to the indication of intent to roam.

5. The method of claim 4, further comprising:
transmitting, to the first AP, a timer duration corresponding to the timer.

6. The method of claim 5, wherein the timer duration is set based on an amount of time that the first AP is requested not to transmit data to the wireless device.

7. The method of claim 1, wherein establishing communication with the second AP comprises:
transmitting, to the second AP, an authorization request;
receiving, from the second AP, an authorization response;
determining a pairwise temporal key (PTK) to use with the second AP;
transmitting, to the second AP, a reassociation request; and
receiving, from the second AP, a reassociation response.

8. The method of claim 1, wherein a first pairwise temporal key (PTK) is used with the first AP and a second PTK is used with the second AP, the second PTK being different from the first AP.

9. The method of claim 1, wherein a same pairwise temporal key (PTK) is used with both the first AP and the second AP.

10. The method of claim 1, wherein determining to roam from the first AP to the second AP is based at least in part on one or more of:
a measurement of signal strength associated with the first AP; or
a measurement of signal strength associated with the second AP.

11. The method of claim 1, wherein the indication of intent to roam comprises one of:
a basic service set (BSS) transition management (BTM) frame; or
an indication of a basic service set (BSS) identifier (BSSID) corresponding to the second AP.

12. An apparatus, comprising:
a processor configured to cause a wireless device to perform a method according to any of claims 1-11.

13. The apparatus of claim 12, further comprising a radio communicatively coupled to the processor.

14. A method, comprising:
at a first access point (AP):
communicating with a controller, wherein the first AP is among a first group of APs managed by the controller;
communicating with a first wireless device;
receiving, from the first wireless device, a first indication of intent to roam from the first AP to a second AP among the first group of APs; and
in response to the first indication of intent to roam:
transmitting, to the controller, a second indication to stop forwarding data for the first wireless device;
removing at least one unit of data from a queue for transmission to the first wireless device; and
transmitting, to the controller, the at least one unit of data.

15. The method of claim 14, further comprising:
receiving, from the controller, a third indication, the third indication comprising at least one of:
an instruction to disassociate with the first wireless device; or
an indication that the first wireless device has roamed out of a basic service set of the first AP.
